(19) Europäisches Patentamt
European Patent Office
Office européen des brevets

(11) **EP 3 184 224 A1**

(12) **EUROPEAN PATENT APPLICATION**

(43) Date of publication:
**28.06.2017 Bulletin 2017/26**

(51) Int Cl.:
***B23H 7/06*** (2006.01)

(21) Application number: **16202040.8**

(22) Date of filing: **02.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.12.2015 JP 2015249998**

(71) Applicant: **FANUC CORPORATION
Oshino-mura
Minamitsuru-gun
Yamanashi 401-0597 (JP)**

(72) Inventor: **OOKUBO, Kousuke
Minamitsuru-gun, Yamanashi 401-0597 (JP)**

(74) Representative: **Ward, James Norman
Haseltine Lake LLP
Bürkleinstrasse 10
80538 München (DE)**

(54) **WIRE-ELECTRIC DISCHARGE MACHINE**

(57)   A machining path in each machining step is generated based on a machining program by a wire-electric discharge machine, and the generated machining path is analyzed to discriminate between a linear part and an arc part of the machining path. Then, a machining speed for machining the arc part is controlled such that discharge energy density per unit distance at the contour part of a workpiece formed by machining is the same between when a case of machining the linear part and in a case of machining the arc part.

FIG. 4A

FIG. 4B

**Description**

[BACKGROUND OF THE INVENTION]

1. Field of the Invention

The present invention relates to a wire-electric discharge machine and, in particular, to a wire-electric discharge machine that issues a command on speed in consideration of the difference between the contour of a workpiece and a machining path at an arc corner.

2. Description of the Related Art

In performing wire-electric discharge machining, it is general to program a machining path in advance such that a workpiece may be machined into a desired shape. The programmed path is called a "program path". In addition, a movement path of the center of a wire electrode where a discharge gap, a wire electrode diameter, etc., besides the program path are taken into consideration is called a "machining path". Here, the discharge gap, the wire electrode diameter, etc., taken into consideration are collectively called an "offset".

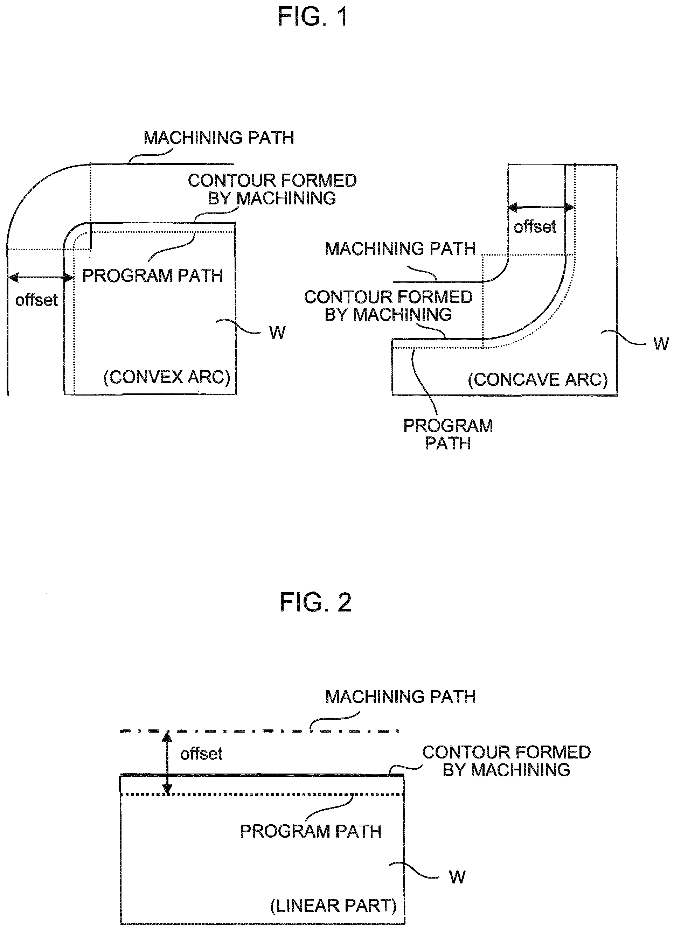

FIG. 1 and FIG. 2 show the relationship between a program path and a machining path.
In actual machining, a numerical controller provided in a wire-electric discharge machine relatively moves a wire electrode (not shown) and a workpiece W along a machining path. At this time, the numerical controller performs control of machining speed based on a physical amount resulting from a discharge generated between the wire electrode and the workpiece. When multiple machining including finish machining is performed, a plurality of machining steps including a first machining step (first cut), a second machining step (second cut), a third machining step, a fourth machining step, or the like is performed. The numerical controller performs the above machining to control a machining speed in all the machining steps to finish the workpiece W into a desired shape.
When a linear part as shown in FIG. 2 is machined, the contour of a workpiece W and a machining path are in parallel with each other. Therefore, the length of the contour of the workpiece W formed by the machining is the same as that of the machining path. However, when an arc part is machined, the length of the contour of a workpiece is not the same as that of a machining path.

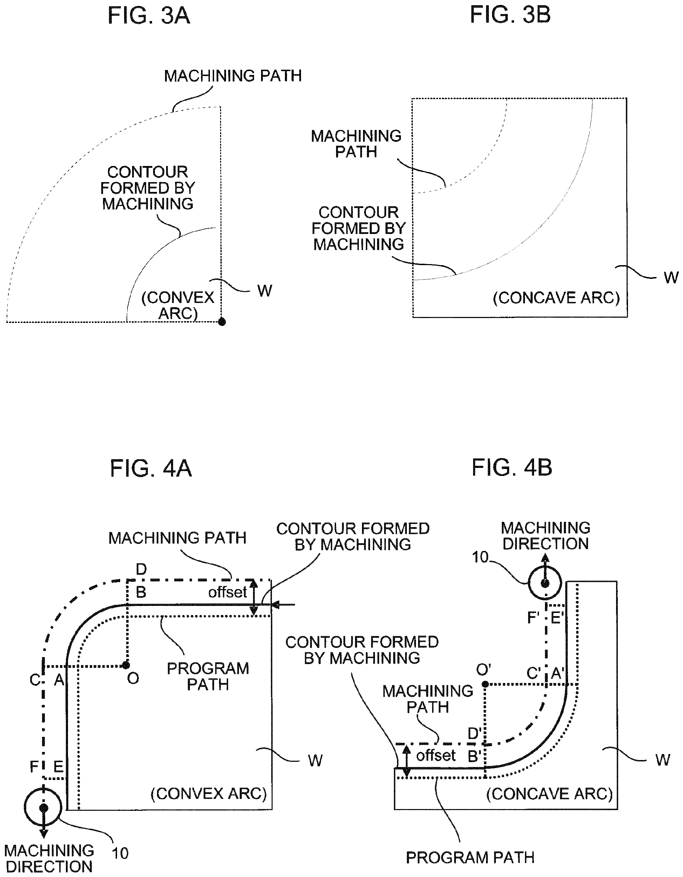

FIGS. 3A and 3B show the relationship between the contour of a workpiece W and a machining path when a convex arc part (FIG. 3A) is machined and the relationship between the contour of a workpiece W and a machining path when a concave arc part (FIG. 3B) is machined, respectively.
When the convex arc part is machined, the length of the contour of the workpiece W formed by the machining is shorter than that of the machining path as shown in FIG. 3A. Accordingly, discharge energy density at the convex arc part becomes higher than that at a linear part per unit distance on the contour of the workpiece W. As a result, the convex arc part is machined to a greater extent than the linear part. On the other hand, when the concave arc part is machined, the length of the contour of the workpiece W formed by the machining becomes longer than that of the machining path as shown in FIG. 3B. Accordingly, discharge energy density at the concave arc part becomes lower than that at a linear part per unit distance on the contour of the workpiece W. As a result, a residual part easily occurs at the concave arc part than at the linear part. Such a phenomenon causes a reason for reducing the shape precision of an arc part.
In recent years, various technologies have been proposed to solve such a problem. For example, the following technologies have been known to control a speed at an arc part to attain an improvement in the shape precision of the arc part.
Japanese Patent Application Laid-open No. 2001-162446 discloses a method for machining an arc part at an intermediate speed while machining a linear part at a high speed.
Japanese Patent Application Laid-open No. H06-126536 discloses a method for calculating a command speed for an arc part based on the same method as that for calculating a linear part and calculating the upper limit of the speed with the function of a program arc radius and an electrode offset amount.
Japanese Patent Application Laid-open No. 2015-160263 discloses a method for controlling, in consideration of the difference between a program path and a machining path at an arc part, a command speed at the arc part on the machining path such that discharge energy density at the arc part is the same as that at a linear part per unit distance on the program path.
Further, Japanese Patent No. 5241850, Japanese Patent Application Laid-open No. 2004-148472, and Japanese Patent No. 5077433 disclose technologies for controlling a machining speed according to a machining amount to attain an improvement in the shape precision of an arc part.
Japanese Patent No. 5241850 discloses a method for controlling a machining speed at a corner part according to a machining amount and performing, when being not capable of securing shape precision only with the control of the machining speed, a correction using a correction value for each arc radius stored in a storage unit.

Japanese Patent Application Laid-open No. 2004-148472 proposes a method for setting four change points and multiplying a prescribed feed speed by the ratio of a removing distance in each section to a removing distance at a linear part to calculate an appropriate feed speed.

Japanese Patent No. 5077433 proposes a method for multiplying (a machining volume per prescribed unit distance at a corner part)/(a machining volume per prescribed unit distance at a linear part) by an average speed at the linear part to calculate a machining speed at the corner part.

However, according to the technology described in Japanese Patent Application Laid-open No. 2001-162446, the contour of a workpiece formed by machining becomes shorter than a machining path when a convex arc is machined. Therefore, discharge energy density at the convex arc becomes higher than that at a linear part per unit distance on the contour of the workpiece formed by the machining, and thus the convex arc is machined to a greater extent than the linear part. Although the convex arc needs to be machined at a faster speed than the linear part in order to prevent the excessive machining, the convex arc is machined at an intermediate speed slower than that for machining the linear part according to the conventional technology, which results in a reduction in the shape precision of an arc part.

Further, according to the method described in Japanese Patent Application Laid-open No. H06-126536, the length of the contour of a workpiece differs from that of an arc on a machining path when an arc part is machined. Therefore, a desired shape is not necessarily obtained when a command speed is calculated by the same method as that for calculating a linear part. In addition, the method needs some coefficients to calculate the upper limit of a speed at the arc part, but the Patent Literature does not clearly demonstrate a method for calculating the coefficients.

Further, according to the method described in Japanese Patent Application Laid-open No. 2015-160263, the contour of a workpiece formed by machining is the same as a program path in the last machining step when multiple machining is performed. Therefore, discharge energy density at an arc part is surely the same as that at a linear part per unit distance on the contour of the workpiece. However, the contour of the workpiece formed by a machining step before the last machining step is not the same as the program path. Accordingly, the discharge energy density per unit distance on the contour of the workpiece formed by the machining steps deviates between the linear part and the arc part. That is, corner drop or a residual part occurs in the middle of the machining steps when the multiple machining is performed, which results in an adverse affect on the shape precision of the workpiece.

Further, Japanese Patent No. 5241850 causes a serious problem in that a method for calculating a correction value for each arc radius is not clearly demonstrated. It takes enormous time and a great deal of labor to calculate a correction value corresponding to any arc radius by trial and error.

Further, according to the technology described in Japanese Patent Application Laid-open No. 2004-148472, the setting of some change points is needed but its implementation is complicated in an actual operation. In addition, since the technology is predicated on constant speed feeding, the range of applying this technology is extremely narrow.

Further, there is a likelihood that the method described in Japanese Patent No. 5077433 is applicable to roughing machining since a machining volume per prescribed unit distance may be estimated to a certain extent based on a machining program. However, when the method is applied to finish machining, it is very difficult to estimate a machining volume for each prescribed unit distance since a machining margin for each part greatly depends on the machining degree of the roughing machining. Accordingly, the application of the method to the finish machining is not practical.

[SUMMARY OF THE INVENTION]

The present invention has been made in order to solve the above problems and has an object of providing a wire-electric discharge machine that controls, in all machining steps, a command speed at an arc part on a machining path such that discharge energy density at an arc part is the same as that at a linear part per unit distance on the contour of a workpiece to improve the shape precision of the arc part.

A wire-electric discharge machine according to the present invention is configured to machine a workpiece through a plurality of machining steps. The wire-electric discharge machine includes: a machining path generation unit that generates a machining path in each of the machining steps, based on a machining program; a wire electrode movement control unit that relatively moves a wire electrode and the workpiece along the machining path; a discharge generation unit that generates a discharge between the wire electrode and the workpiece to perform discharge machining; a machining speed control unit that issues a command on a relative movement speed of the wire electrode with respect to the workpiece as a machining speed, based on a physical amount resulting from the discharge; a machining path analysis unit that analyzes the machining path to discriminate between a linear part and an arc part of the machining path; and an arc-part speed control unit that controls the machining speed to machine the arc part such that discharge energy density per unit distance at a contour part of the workpiece formed by the machining is same between in a case of machining the linear part and in a case of machining the arc part.

The arc-part speed control unit may be configured to control the machining speed, based on a difference between an arc length of a contour of the workpiece and an arc length of the machining path.

The arc-part speed control unit may be configured to control the machining speed, based on a ratio of a curvature radius of the arc part of a contour of the workpiece to a curvature radius of the arc part of the machining path.

The arc-part speed control unit may be configured to control the machining speed, based on a ratio of a curvature radius of a track of an end point of a wire electrode to a curvature radius of the arc part of the machining path.

The machining speed control unit may be configured to control the machining speed, based on a prescribed speed.

The machining speed control unit may be configured to control the machining speed, based on the physical amount resulting from the discharge.

According to the present invention, it is possible to provide a wire-electric discharge machine that controls, in all machining steps, a command speed at an arc part on a machining path such that discharge energy density at an arc part is the same as that at a linear part per unit distance on the contour of a workpiece to improve the shape precision of the arc part.

[BRIEF DESCRIPTION OF THE DRAWINGS]

The above and other objects and features of the present invention will become apparent from the descriptions of the following embodiments with reference to the accompanying drawings in which;

FIG. 1 is a diagram showing the relationship between a program path and a machining path;

FIG. 2 is a diagram showing the relationship between a program path and a machining path;

FIGS. 3A and 3B are a diagram showing the relationship between the contour of a workpiece and a machining path when a convex arc part (FIG. 3A) is machined and a diagram showing the relationship between the contour of a workpiece and a machining path when a concave arc part (FIG. 3B) is machined, respectively.

FIGS. 4A and 4B are diagrams for describing a difference in discharge energy density per unit distance between a linear part and an arc part on the contour of a workpiece formed by machining and a reduction in shape precision resulting from the difference;

FIG. 5 is a block diagram showing the configuration of a wire-electric discharge machine according to an embodiment of the present invention;

FIGS. 6A and 6B are diagrams each showing an enlarged part of FIG. 4A, FIG. 6A showing a linear part AE, FIG. 6B showing an arc part BA;

FIGS. 7A and 7B are diagrams each showing an enlarged part of FIG. 4B, FIG. 7A showing a linear part A'E', FIG. 7B showing an arc part B'A';

FIGS. 8A and 8B are a diagram showing the relationship between a machining path and the contour of a workpiece formed when a convex arc part (FIG. 8A) is machined and a diagram showing the relationship a machining path and the contour of a workpiece formed when a concave arc part (FIG. 8B) is machined, respectively;

FIGS. 9A and 9B are diagrams each showing the relationship between the contour of a workpiece formed by machining and a machining path at an arc part;

FIGS. 10A and 10B are diagrams each showing the relationship between an arc radius on a machining path, an offset, a wire electrode diameter, and a discharge gap at an arc part;

FIGS. 11A and 11B are diagrams each showing a method for approximating the contour of a workpiece formed with a track drawn by the end point of a wire electrode;

FIG. 12 is a diagram showing an example of a machining program;

FIG. 13 is a diagram showing an example of setting an offset value;

FIG. 14 is a flowchart for describing the flow of the control processing of a command speed according to Example 1; and

FIG. 15 is a flowchart for describing the flow of the control processing of a command speed according to Example 2.

[DETAILED DESCRIPTION OF THE PREFERRED EMBODIMENTS]

To begin with, a description will be given of the outline of a wire-electric discharge machine according to the present invention.

First, a description will be given, with reference to FIGS. 4A and 4B, of a difference in discharge energy density per unit distance between a linear part and an arc part on the contour of a workpiece formed by machining and a reduction in shape precision resulting from the difference.

FIG. 4A shows the relationship between the contour of a workpiece and a machining path when a convex arc part is machined.

The arc center of the arc part on the machining path is represented as a point O. The intersection points between the contour of a workpiece W and lines perpendicular from the point O to the contour (represented as a solid line) of the workpiece W formed by machining are represented as A and B, respectively. The intersection points between a machining path (represented as a chain line) and the extended lines of line segments OA and OB are represented as C and D, respectively. A point at a position away from the point C by the same distance as the distance between the points D and C at a linear part on the machining path is represented as F. The intersection point between the contour of the workpiece and a line perpendicular from the point F to the contour (represented as the solid line) of the workpiece formed by the machining is represented as E.

Here, when discharge energy density per unit distance is represented as $E_a$, discharge energy density $E_{DC}$ between the points D and C and discharge energy density $E_{CF}$ between the points C and F are calculated by the following expression (1).

$$E_{DC} = E_a \times DC$$

$$E_{CF} = E_a \times CF \qquad \ldots (1)$$

When a wire electrode performs machining along a machining path DC, a BA part of the workpiece W is machined. When the wire electrode performs machining along a machining path CF, an AE part of the workpiece W is machined. Using discharge energy at the machining paths DC and CF calculated by the above expression (1), discharge energy density $E_{BA}$ and $E_{AE}$ per unit distance at the contours BA and AE of the workpiece W formed by the machining may be calculated by the following expression (2).

$$E_{BA} = E_{DC}/BA$$

$$E_{AE} = E_{CF}/AE \qquad \ldots (2)$$

Since the distances of the machining paths DC and CF are the same, $E_{DC} = E_{CF}$ is established. Where $E_{DC} = E_{CF} = E_t$ is set, the above expression (2) may be rewritten as the following expression (3).

$$E_{BA} = E_{DC}/BA = E_t/BA$$

$$E_{AE} = E_{CF}/AE = E_t/AE \qquad \ldots (3)$$

However, since AE = CF = DC > BA is established, $E_{BA} > E_{AE}$ is established by the above expression (3). That is, the discharge energy density per unit distance at the contour BA of the workpiece formed by the machining becomes greater than that at the contour AE. Accordingly, the arc part BA is machined to a greater extent than the linear part AE, which results in a reduction in the shape precision of the workpiece W.

FIG. 4B shows the relationship between the contour of a workpiece and a machining path when a concave arc part is machined.

In this case, discharge energy density per unit distance at a contour B'A' of a workpiece W formed by the machining becomes smaller than that at a contour A'E'. This results in the occurrence of a residual part at the arc part B'A'.

In view of the above problem, the wire-electric discharge machine according to the present invention controls a command speed on a machining path such that discharge energy density at an arc part is the same as that at a linear part per unit distance on the contour of a workpiece formed by machining. Thus, an improvement in the shape precision of the arc part is allowed.

Specifically, a machining speed at a convex arc part is set to be faster than that at a linear part on a machining path, which allows a reduction in discharge energy density per unit distance on the contour of a workpiece formed by machining. On the other hand, a machining speed at a concave arc part is set to be slower than that at a linear part on a machining path, which allows an improvement in discharge energy density per unit distance on the contour of a workpiece formed by machining. Accordingly, the wire-electric discharge machine according to the present invention controls a command speed at an arc part on a machining path such that a machining speed accelerates at a convex arc and decelerates at a concave arc.

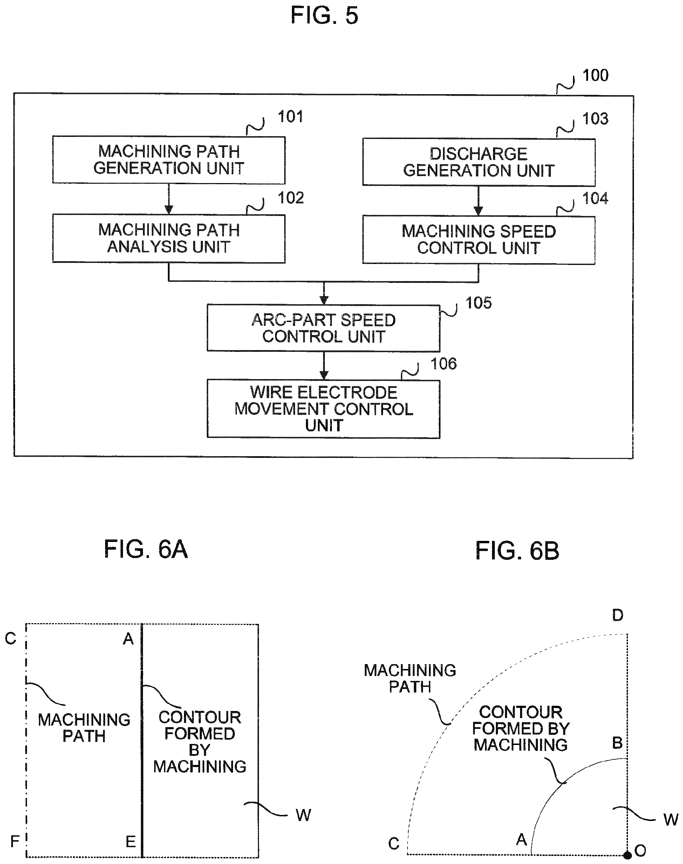

FIG. 5 is a block diagram showing the configuration of a wire-electric discharge machine 100 according to an embodiment of the present invention.

The wire-electric discharge machine 100 has a machining path generation unit 101, a machining path analysis unit 102, a discharge generation unit 103, a machining speed control unit 104, an arc-part speed control unit 105, and a wire electrode movement control unit 106.

The machining path generation unit 101 generates a machining path based on a machining program and a wire electrode offset amount stored in a storage region (not shown).

The discharge generation unit 103 generates a discharge between a wire electrode and a workpiece to perform discharge machining on the workpiece.

The machining speed control unit 104 calculates the relative movement speed of a wire electrode with respect to a workpiece based on a physical amount resulting from a discharge generated by the discharge generation unit 103, and sets the calculated relative movement speed as a command speed on a machining path. The machining speed control unit 104 outputs the command speed to the wire electrode movement control unit 106.

The machining path analysis unit 102 analyzes a machining path generated by the machining path generation unit 101, and determines whether the machining path includes an arc part. When determining that the machining path includes the arc part, the machining path analysis unit 102 operates the arc-part speed control unit 105.

The arc-part speed control unit 105 calculates a command speed at an arc part such that discharge energy density per unit distance on the contour of a workpiece (formed by machining) formed after a wire electrode passes through a machining path is the same as that when a linear part is machined at a command speed calculated by the machining speed control unit 104. When an arc part is machined, the arc-part speed control unit 105 outputs a command speed calculated by the arc-part speed control unit 105 to the wire electrode movement control unit 106 instead of a command speed calculated by the machining speed control unit 104.

The wire electrode movement control unit 106 relatively moves a wire electrode and a workpiece along a machining path according to a command speed input from the machining speed control unit 104 or the arc-part speed control unit 105.

Besides calculating a machining speed according to a physical amount resulting from a discharge generated between a wire electrode and a workpiece to perform machining speed control, the wire-electric discharge machine 100 is allowed to perform the control of a machining speed called constant speed feeding. In the case of the constant speed feeding, a machining speed is fixed at a prescribed speed, and a wire electrode is caused to relatively move with respect to a workpiece at the same speed from beginning to end during machining.

Hereinafter, a description will be given of some examples of speed control processing at an arc part by the wire-electric discharge machine 100.

Example 1: An arc part is machined by constant speed feeding.

As described above, in order to secure the shape precision of an arc part, discharge energy density at the arc part per unit distance on the contour of a workpiece formed by machining needs to be the same as that at a linear part. In the case of the constant speed feeding as well, a command speed at an arc part on a machining path is controlled, whereby discharge energy density at the arc part may be the same as that at a linear part.

(1) A description will be given of speed control when the convex arc shown in FIG. 4A is machined.

The discharge energy density $E_t$ per unit time is made constant, an average machining speed at the contour BA of the workpiece formed by the machining is represented as $v_{BA}$, and an average machining speed at the contour AE of the workpiece W formed by the machining is represented as $v_{AE}$. Here, the discharge energy density $E_{BA}$ and $E_{AE}$ per unit distance at the contours BA and AE is calculated by the following expression (4).

$$E_{BA} = E_t / v_{BA}$$

$$E_{AE} = E_t / v_{AE} \qquad ...(4)$$

In order to make the discharge energy density at the arc part the same as that at the linear part per unit distance on the contour of the workpiece formed by the machining in the above expression (4), the average machining speeds $v_{BA}$ and $v_{AE}$ at the contours BA and AE need to satisfy the following relationship.

$$v_{BA} = v_{AE} \qquad ...(5)$$

FIGS. 6A and 6B are diagrams each showing an enlarged part of FIG. 4A. FIG. 6A shows the linear part AE, and FIG. 6B shows the arc part BA.

First, consideration is given to the linear part. When the contour of the workpiece formed when the wire electrode moves along the machining path CF for time t is represented as AE, the following expression is obtained.

$$t = CF / v_{CF} = AE / v_{AE} \qquad ...(6)$$

Here, $V_{CF}$ represents a prescribed machining speed.

Since the length of the machining path CF is the same as that of the contour AE of the workpiece formed by the machining at the linear part, the following speed relational expression is obtained.

$$V_{CF} = V_{AE} \qquad \ldots (7)$$

Next, consideration is given to the arc part. When the contour of the workpiece formed when the wire electrode moves along the machining path DC for time t is represented as BA, the following relational expression is obtained.

$$t = DC/v_{DC} = BA/v_{BA} \qquad \ldots (8)$$

Here, $v_{DC}$ represents a prescribed machining speed.

Since the length of the machining path DC is not the same as that of the contour BA of the workpiece formed by the machining at the arc part, a machining speed on the machining path differs from that on the contour of the workpiece formed by the machining. The relationship between these machining speeds may be represented by the following expression.

$$v_{DC} = (DC/BA) \times v_{BA} \qquad \ldots (9)$$

As described above, in order to make the discharge energy density at the arc part the same as that at the linear part per unit distance, the speed relationship as shown in the above expression (5) needs to be satisfied. In order to satisfy the relationship and secure the shape precision of the arc part, a command speed on the machining path DC needs to be based on the above expressions (5), (7), and (9) and controlled based on the following relational expression.

$$v_{DC} = (DC/BA) \times v_{CF} \qquad \ldots (10)$$

Here, $v_{DC}$ represents a command speed output from the arc-part speed control unit 105.

(2) A description will be given of speed control when the concave arc shown in FIG. 4B is machined.

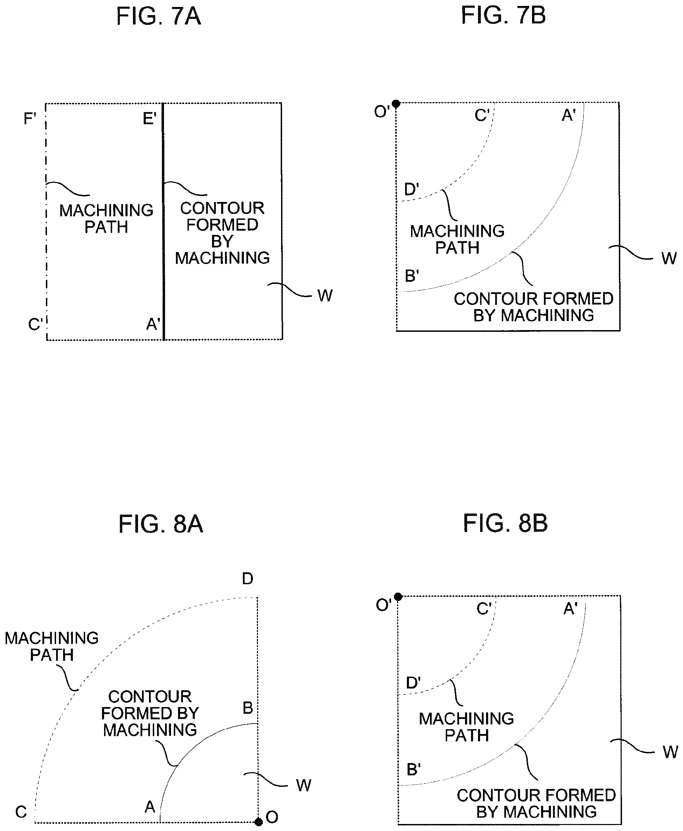

FIGS. 7A and 7B are diagrams each showing an enlarged part of FIG. 4B. FIG. 7A shows the linear part A'E', and FIG. 7B shows the arc part B'A'.

Based on the same viewpoint as that of the convex arc described above, the following speed control expression is obtained with regard to a command speed $v_{D'C'}$ on the machining path D'C'. Therefore, the command speed $v_{D'C'}$ on the machining path D'C' needs only to be controlled based on the following expression (11).

$$v_{D'C'} \; (D'C'/B'A') \times v_{C'F'} \qquad \ldots (11)$$

Here, $v_{C'F'}$ represents a prescribed machining speed. In addition, $v_{D'C'}$ represents a command speed output from the arc-part speed control unit 105.

As described above, in the case of the constant speed feeding, a command speed at an arc part on a machining path is calculated by the following expression regardless of which of a convex arc and a concave arc is machined.

Command speed at arc part on machining path = (arc length

on machining path/arc length on contour of workpiece formed by

machining) × prescribed machining speed $\qquad \ldots (12)$

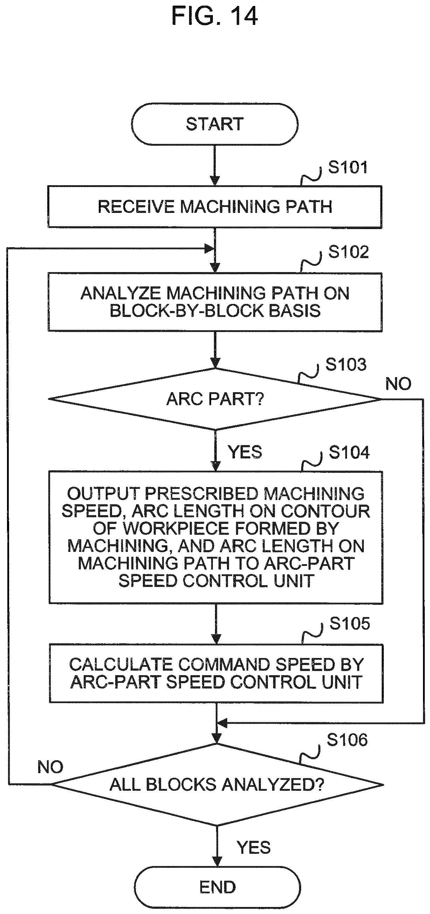

FIG. 14 is a flowchart for describing the flow of the control processing of a command speed according to the Example 1.

The machining path analysis unit 102 receives a machining path generated by the machining path generation unit 101 (step S101). The machining path analysis unit 102 analyzes the received machining path on a block-by-block basis (step S102) and determines whether the machining path includes an arc part (step S103). The machining proceeds to step S104 when the machining path includes the arc part. Otherwise, the machining proceeds to step S106.

In step S104, the machining path analysis unit 102 outputs a prescribed machining speed, an arc length on the contour of a workpiece formed by machining, and an arc length on the machining path to the arc-part speed control unit 105. In step S105, the arc-part speed control unit 105 calculates a command speed based on the above expression (12). Then, in step S106, the machining path analysis unit 102 determines whether all the blocks have been analyzed. The machining returns to step S102 when there is any block that has not been analyzed. The control processing ends when all the blocks have been analyzed.

Example 2: A machining speed at an arc part is calculated according to a physical amount resulting from a discharge generated between a wire electrode and a workpiece.

As described in the Example 1, a command speed on a machining path needs to change between a case where an arc part is machined and a case where a linear part is machined. This is because the length of the contour of a workpiece formed by machining differs from that of a machining path.

In other words, discharge energy density at an arc part needs to be the same as that at a linear part per unit distance on the contour of a workpiece formed by machining. To this end, a machining speed on the contour of the workpiece formed by the machining needs only to be the same as a machining speed calculated by the machining speed control unit. That is, when an arc part is machined, a machining speed on a machining path needs only to be controlled such that a machining speed on the contour of a workpiece formed by machining is the same as a machining speed calculated by the machining speed control unit 104.

Hereinafter, a description will be given, with reference to FIGS. 8A and 8b, of the method of the speed control according to this Example. FIGS. 8A and 8B are a diagram showing the relationship between a machining path and the contour of a workpiece formed when a convex arc part (FIG. 8A) is machined and a diagram showing the relationship between a machining path and the contour of a workpiece formed when a concave arc part (FIG. 8B) is machined, respectively.

(1) A description will be given of a case in which the convex arc part shown in FIG. 8A is machined.

A machining speed on a machining path DC calculated by the machining speed control unit 104 is represented as $v_{DC}$. As described above, in order to make discharge energy density at an arc part the same as that at a linear part per unit distance on the contour of a workpiece formed by machining, a machining speed on a contour BA of the workpiece needs to be the same as $v_{DC}$ (representing a command speed output from the arc-part speed control unit 105).

As for the arc part shown in FIG. 8A, the following expression is obtained when the relative movement time of a wire electrode with respect to the workpiece is represented as t.

$$t = BA/v_{DC} \qquad \ldots (13)$$

The relative movement time of the wire electrode with respect to the workpiece is the same between the contour of the workpiece BA formed by the machining and the machining path DC. Therefore, the following expression is obtained when a command speed on the machining path DC output from the arc-part speed control unit 105 is represented as v.

$$t = DC/v \qquad \ldots (14)$$

Based on the above expressions (13) and (14), a control speed on the machining path may be calculated by the following expression.

$$v = (DC/BA) \times v_{DC} \qquad \ldots (15)$$

(2) A description will be given of a case in which the concave arc part shown in FIG. 8B is machined.

Based on the same viewpoint as that of the convex arc part described above, the following speed control expression is obtained.

$$v' = (D'C'/B'A') \times v_{D'C'} \qquad \ldots(16)$$

Here, $v_{D'C'}$ represents a machining speed calculated by the machining speed control unit 104, and v' represents a command speed output from the arc-part speed control unit 105.

As described above, when a machining speed is calculated based on a physical amount resulting from a discharge generated between a wire electrode and a workpiece, a command speed at an arc part is calculated by the following expression regardless of which of a convex arc and a concave arc is machined.

$$\text{Command speed at arc part on machining path}$$

$$= (\text{arc length on machining path/arc length on contour of}$$

$$\text{workpiece formed by machining}) \times \text{machining speed calculated by}$$

$$\text{machining speed control unit 104} \qquad \ldots(17)$$

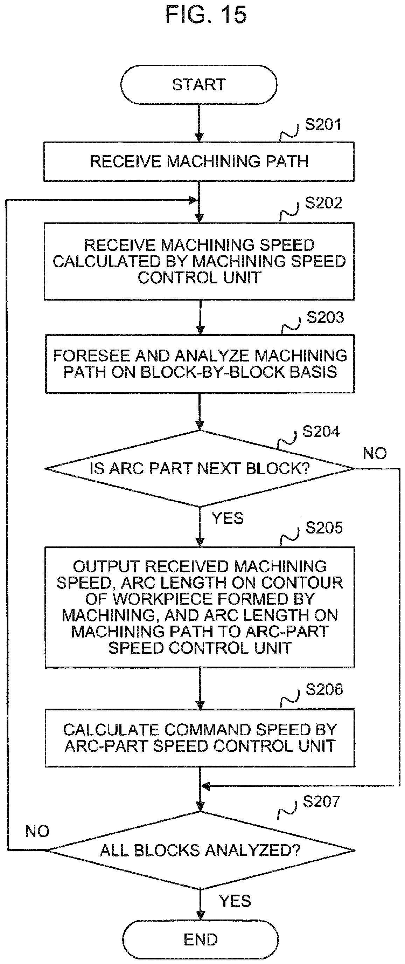

FIG. 15 is a flowchart for describing the flow of the control processing of a command speed on a machining path according to the Example 2.

The machining path analysis unit 102 receives a machining path generated by the machining path generation unit 101 (step S201) and then receives a machining speed generated by the machining speed control unit 104 (step S202). The machining path analysis unit 102 foresees and analyzes the machining path on a block-by-block basis (step S203) and determines whether a machining result includes an arc part (step S204). The machining proceeds to step S204 when the machining path includes the arc part. Otherwise, the machining proceeds to step S207.

In step S205, the machining path analysis unit 102 outputs the machining speed received from the machining speed control unit 104, an arc length on the contour of a workpiece formed by machining, and an arc length on the machining path to the arc-part speed control unit 105. Then, in step S206, the arc-part speed control unit 105 calculates a command speed based on the above expression (17). In step S207, the machining path analysis unit 102 determines whether all the blocks have been analyzed. The machining returns to step S202 when there is any block that has not been analyzed. The control processing ends when all the blocks have been analyzed.

Example 3: A command speed is controlled using the relationship between an arc length on the contour of a workpiece formed by machining and an arc length on a machining path.

In wire-electric discharge machining, a machining path is programmed in advance based on a desired shape. The programmed path is called a "program path," a movement path of the center of a wire electrode where a discharge gap, a wire electrode diameter, etc., besides the program path are taken into consideration is called a "machining path," and the discharge gap, the wire electrode diameter, etc., taken into consideration are collectively called an "offset".

As described in the Examples 1 and 2, a command speed at an arc part may be calculated using the relationship between an arc length on the contour of a workpiece formed by machining and an arc length on a machining path.

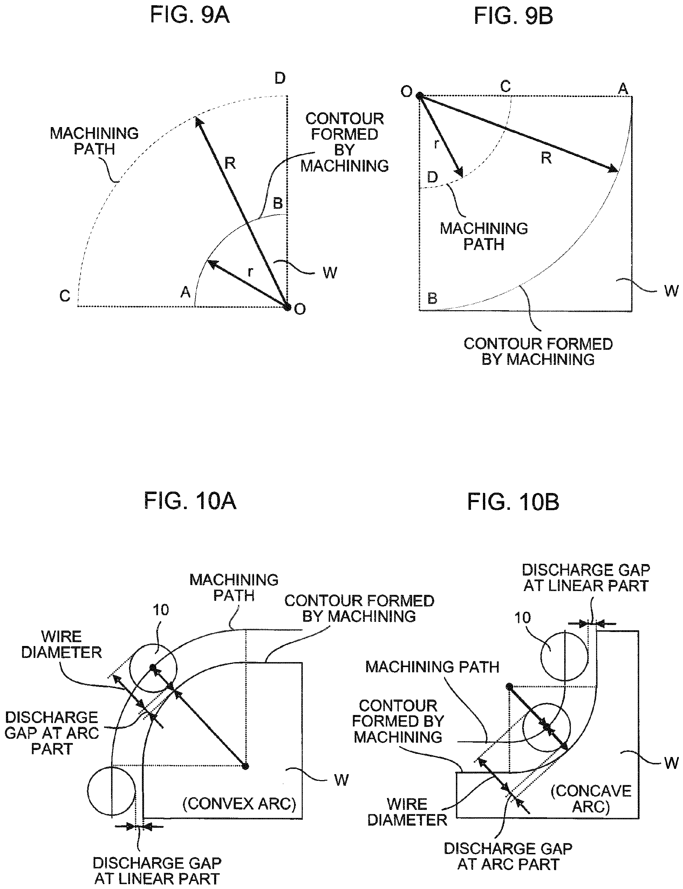

FIGS. 9A and 9B are diagrams each showing the relationship between the contour of a workpiece formed by machining and a machining path at an arc part. From each of FIGS. 9A and 9B, it is found that the contour of the workpiece generated by the machining and the machining path are arranged in a concentric pattern at the arc part. In the case of the concentric circle, the proportional relationship between arc lengths may be expressed by arc radii provided that the center angles of the arcs are the same.

$$DC/BA = (\pi R \times \theta/180°)/(\pi r \times \theta/180°)$$

$$= R/r \qquad \ldots(18)$$

Here, r represents the arc radius of the contour BA of a workpiece formed by machining, R represents the arc radius of the machining path DC, and $\theta$ represents the center angles of the arc BA and the arc DC.

The calculation expression described in the Example 2 is expressed by the following expression (19) using an arc radius on the contour of a workpiece formed by machining and an arc radius on a machining path.

```
Command speed at arc part on machining path

= (arc radius on machining path/arc radius on contour of

workpiece) × machining speed calculated by machining speed

control unit 104                    …(19)
```

As shown in FIGS. 10A and 10B, an arc radius on the contour of a workpiece formed by machining is expressed by the following expression (20) using an arc radius on a machining path, an offset, a wire electrode diameter, and a discharge gap at an arc part.

*For convex arc

```
Arc radius on contour of workpiece formed by machining = arc radius on machining path − (wire electrode diameter/2) − discharge gap at arc part
```

*For concave arc

```
Arc radius on contour of workpiece formed by machining = arc radius on machining path + (wire electrode diameter/2) + discharge gap at arc part

                                    …(20)
```

Accordingly, in order to calculate an arc radius on the contour of a workpiece formed by machining, an offset, a wire electrode diameter, and a discharge gap at an arc part in each machining step besides an arc radius on a machining path are needed. An offset and a wire electrode diameter are known from a program and machining conditions.

A discharge gap at an arc part in each machining step is obtained by the measurement of the dimensions of an actually-machined workpiece, but the measurement of the dimensions of the arc part is not easy. In view of this problem, since a discharge gap is ideally the same between a linear part and an arc part when discharge energy density at the arc part is the same as that at the linear part per unit distance on a contour formed by machining, the discharge gap at the arc part is replaced with the discharge gap at the linear part. The dimensions of the discharge gap at the linear part are easily calculated. Therefore, the discharge gap at the linear part of the actually-machined workpiece is measured in advance and stored in a storage region not shown. The arc radius on the contour of the workpiece formed by the machining may be calculated by the following expression (21) using the discharge gap of the linear part read from the storage region.

*For convex arc (FIG. 10A)

```
Arc radius on contour of workpiece formed by machining = arc radius on machining path − (wire electrode diameter/2) − discharge gap at linear part
```

*For concave arc (FIG. 10B)

$$\text{Arc radius on contour of workpiece formed by machining}$$

$$= \text{arc radius on machining path} + (\text{wire electrode}$$

$$\text{diameter}/2) + \text{discharge gap at linear part}$$

$$\ldots(21)$$

Example 4: A command speed at an arc part on a machining path is calculated by the above expression (19) based on the ratio of the curvature radius of an arc part on the contour of a workpiece formed by machining to a curvature radius on a machining path as described in the Example 3.

Using the above Example 3, it is possible to make discharge energy density at an arc part the same as that at a linear part per unit distance on the contour of a workpiece formed by machining. However, it takes enormous time and a great deal of labor to record a discharge gap at the linear part. In view of this problem, it is assumed to approximate the contour of a workpiece formed by machining with one that less deviates from the contour of the workpiece formed by the machining and makes it possible to easily calculate a machining speed on a machining path. A discharge gap generally takes a small value of several micrometers to ten-odd micrometers.

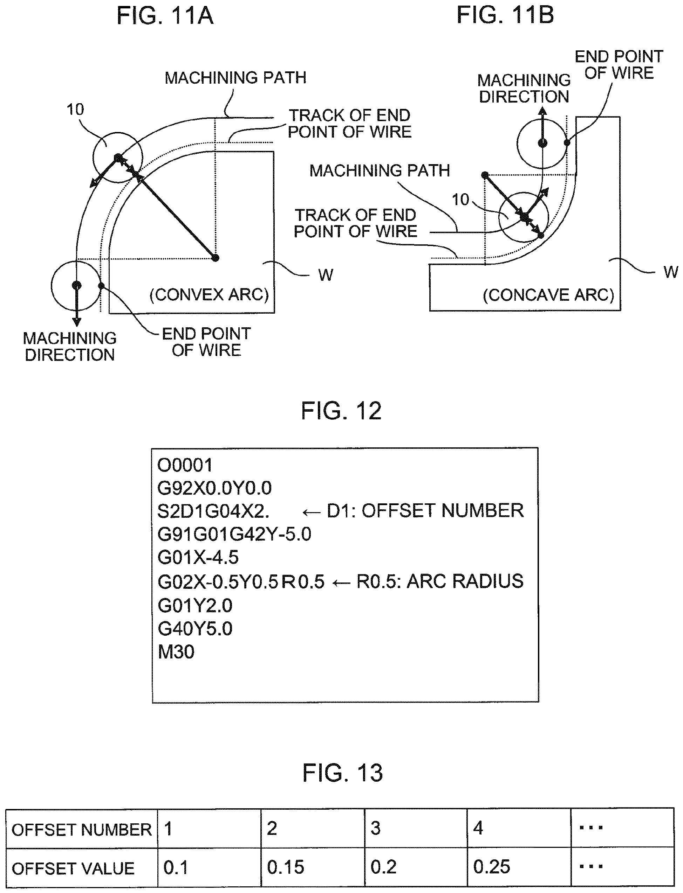

Example 4 proposes, as shown in FIGS. 11A and 11B, a method for approximating the contour of a workpiece formed by machining with a track drawn by the end point of a wire electrode when the wire electrode moves on a machining path. On this occasion, the vibration, delay, or the like of the wire electrode is not taken into consideration, and it is assumed that the center of the wire electrode ideally moves on the machining path.

In order to make discharge energy density at an arc part the same as that at a linear part per unit distance on the track of the end point of a wire electrode, a command speed on a machining path needs only to be calculated by the following expression (22) based on the same viewpoint as those of the Examples 2 and 3.

$$\text{Command speed at arc part on machining path}$$

$$= (\text{arc radius on machining path}/\text{arc radius on track of end}$$

$$\text{point of wire electrode}) \times \text{machining speed calculated by}$$

$$\text{machining speed control unit 104} \qquad \ldots(22)$$

As shown in FIGS. 11A and 11B, an arc radius on the track of the end point of a wire electrode may be calculated by the following expression (23) using an arc radius on a machining path and a wire electrode diameter.

$$\text{Arc radius on track of end point of wire electrode}$$

$$= \text{arc radius on machining path} - \text{wire electrode diameter}/2$$

$$\ldots(23)$$

Accordingly, a controlled speed on a machining path for making discharge energy density at an arc part the same as that at a linear part per unit distance on the track of the end point of a wire electrode may be easily calculated by the above expression (22) based only on the three elements of an arc radius on the machining path, a wire electrode diameter, and a machining speed calculated by the machining speed calculation unit.

For example, if an arc radius and an offset number on the finished product of a workpiece are described and an offset value corresponding to the offset number is defined in advance (see FIG. 13) in a program shown in FIG. 12 when machining is performed based on the program, one of the three elements, i.e., an arc radius on a machining path is found by the output of the arc radius and the offset value to the machining path generation unit.

In addition, a wire electrode diameter may be found by the setting of machining conditions. Moreover, the relative movement speed of a wire electrode on a machining path with respect to a workpiece may be calculated by the machining speed control unit 104. Accordingly, the above three necessary elements may be easily obtained.

According to the above embodiment, the arc-part speed control unit 105 controls a command speed on a machining path such that discharge energy density at an arc part is the same as that at a linear part per unit distance on the contour of a workpiece formed by machining, which makes it possible to realize an improvement in the shape precision of the arc part.

In addition, the contour of a workpiece formed by machining is approximated with the track of the end point of a wire electrode, which makes it possible to save the labor of settings while maintaining an improvement in the shape precision of an arc part.

Moreover, as a coefficient for controlling a speed, only the ratio of an arc radius on the track of the end point of a wire electrode to an arc radius on a machining path is used, which makes it possible to save the labor of providing some coefficients. Further, since the start point or the end point of an arc may be easily analyzed based on a machining program, the labor of setting some changes is eliminated unlike the conventional technologies.

Furthermore, particularly when a program includes information such as an arc length and an arc radius, it is possible to perform automatic speed control without any settings by a person.

Note that the present invention is not limited to the above embodiment but may be modified by the replacement, omission, addition, rearrangement, or the like of constituents without departing from its scope. For example, the present invention is applicable not only to an arc at a corner part but also to a single arc. In this case as well, an improvement in shape precision may be obtained.

**Claims**

1. A wire-electric discharge machine that machines a workpiece through a plurality of machining steps, the wire-electric discharge machine comprising:

   a machining path generation unit that generates a machining path in each of the machining steps, based on a machining program;
   a wire electrode movement control unit that relatively moves a wire electrode and the workpiece along the machining path;
   a discharge generation unit that generates a discharge between the wire electrode and the workpiece to perform discharge machining; and
   a machining speed control unit that issues a command on a relative movement speed of the wire electrode with respect to the workpiece as a machining speed, based on a physical amount resulting from the discharge,
   the wire-electric discharge machine further comprising:

   a machining path analysis unit that analyzes the machining path to discriminate between a linear part and an arc part of the machining path; and
   an arc-part speed control unit that controls the machining speed to machine the arc part such that discharge energy density per unit distance at a contour part of the workpiece, which is formed by the machining, is same between a case of machining the linear part and a case of machining the arc part.

2. The wire-electric discharge machine according to claim 1, wherein
   the arc-part speed control unit is configured to control the machining speed, based on a difference between an arc length of a contour of the workpiece and an arc length of the machining path.

3. The wire-electric discharge machine according to claim 1, wherein
   the arc-part speed control unit is configured to control the machining speed, based on a ratio of a curvature radius of the arc part of a contour of the workpiece to a curvature radius of the arc part of the machining path.

4. The wire-electric discharge machine according to claim 1, wherein
   the arc-part speed control unit is configured to control the machining speed, based on a ratio of a curvature radius of a track of an end point of a wire electrode to a curvature radius of the arc part of the machining path.

5. The wire-electric discharge machine according to claim 1, wherein
   the machining speed control unit is configured to control the machining speed, based on a prescribed speed.

6. The wire-electric discharge machine according to claim 1, wherein
   the machining speed control unit is configured to control the machining speed, based on the physical amount resulting from the discharge.

# FIG. 1

MACHINING PATH

CONTOUR FORMED
BY MACHINING

PROGRAM PATH

offset

W

(CONVEX ARC)

offset

MACHINING PATH

CONTOUR FORMED
BY MACHINING

W

(CONCAVE ARC)

PROGRAM
PATH

# FIG. 2

MACHINING PATH

offset

CONTOUR FORMED
BY MACHINING

PROGRAM PATH

W

(LINEAR PART)

# FIG. 3A

MACHINING PATH

CONTOUR
FORMED BY
MACHINING

(CONVEX
ARC)

W

# FIG. 3B

MACHINING
PATH

CONTOUR
FORMED BY
MACHINING

W

(CONCAVE ARC)

# FIG. 4A

MACHINING PATH

CONTOUR FORMED
BY MACHINING

D
B
offset

C A O

PROGRAM
PATH

F E

W

(CONVEX ARC)

MACHINING 10
DIRECTION

# FIG. 4B

MACHINING
DIRECTION

10

F' E'

CONTOUR FORMED
BY MACHINING

MACHINING
PATH

O' C' A'

D'
offset B'

W

(CONCAVE ARC)

PROGRAM PATH

# FIG. 5

# FIG. 6A

# FIG. 6B

## FIG. 7A

F'             E'

MACHINING PATH

CONTOUR FORMED BY MACHINING

W

C'             A'

## FIG. 7B

O'       C'       A'

D'

MACHINING PATH

B'

CONTOUR FORMED BY MACHINING

W

## FIG. 8A

D

MACHINING PATH

CONTOUR FORMED BY MACHINING

B

W

C       A       O

## FIG. 8B

O'       C'       A'

D'

MACHINING PATH

B'

CONTOUR FORMED BY MACHINING

W

## FIG. 9A

MACHINING
PATH

CONTOUR
FORMED
BY
MACHINING

R

r

W

D

B

C

A

O

## FIG. 9B

O

C

A

r

R

D

MACHINING
PATH

B

W

CONTOUR FORMED
BY MACHINING

## FIG. 10A

MACHINING
PATH

CONTOUR FORMED
BY MACHINING

10

WIRE
DIAMETER

DISCHARGE
GAP AT ARC
PART

W

(CONVEX ARC)

DISCHARGE GAP
AT LINEAR PART

## FIG. 10B

DISCHARGE GAP
AT LINEAR PART

10

MACHINING PATH

CONTOUR
FORMED BY
MACHINING

W

WIRE
DIAMETER

(CONCAVE
ARC)

DISCHARGE GAP
AT ARC PART

## FIG. 11A

MACHINING PATH

TRACK OF END
POINT OF WIRE

10

W

(CONVEX ARC)

MACHINING
DIRECTION

END POINT
OF WIRE

## FIG. 11B

MACHINING
DIRECTION

END POINT
OF WIRE

MACHINING PATH

TRACK OF END
POINT OF WIRE

10

W

(CONCAVE ARC)

## FIG. 12

```
O0001
G92X0.0Y0.0
S2D1G04X2.       ← D1: OFFSET NUMBER
G91G01G42Y-5.0
G01X-4.5
G02X-0.5Y0.5 R0.5 ← R0.5: ARC RADIUS
G01Y2.0
G40Y5.0
M30
```

## FIG. 13

| OFFSET NUMBER | 1 | 2 | 3 | 4 | ... |
|---|---|---|---|---|---|
| OFFSET VALUE | 0.1 | 0.15 | 0.2 | 0.25 | ... |

# FIG. 14

```
                    START

                       │
                       ▼                    S101
        ┌──────────────────────────────┐
        │   RECEIVE MACHINING PATH      │
        └──────────────────────────────┘
                       │
      ┌───────────────►│                   S102
      │                ▼
      │ ┌──────────────────────────────┐
      │ │  ANALYZE MACHINING PATH ON    │
      │ │    BLOCK-BY-BLOCK BASIS       │
      │ └──────────────────────────────┘
      │                │
      │                ▼                   S103        NO
      │         ◇─────────────────◇─────────────────┐
      │          ARC PART?                           │
      │         ◇─────────────────◇                  │
      │                │ YES         S104             │
      │                ▼                              │
      │ ┌──────────────────────────────┐             │
      │ │ OUTPUT PRESCRIBED MACHINING   │             │
      │ │ SPEED, ARC LENGTH ON CONTOUR  │             │
      │ │  OF WORKPIECE FORMED BY       │             │
      │ │ MACHINING, AND ARC LENGTH ON  │             │
      │ │  MACHINING PATH TO ARC-PART   │             │
      │ │     SPEED CONTROL UNIT        │             │
      │ └──────────────────────────────┘             │
      │                │                              │
      │                ▼             S105             │
      │ ┌──────────────────────────────┐             │
      │ │ CALCULATE COMMAND SPEED BY    │             │
      │ │ ARC-PART SPEED CONTROL UNIT   │             │
      │ └──────────────────────────────┘             │
      │                │                              │
      │                ▼◄─────────────────────────────┘
      │  NO            │               S106
      └──────◇─────────────────────◇
             ALL BLOCKS ANALYZED?
              ◇─────────────────◇
                       │ YES
                       ▼
                     END
```

# FIG. 15

START

S201

RECEIVE MACHINING PATH

S202

RECEIVE MACHINING SPEED
CALCULATED BY MACHINING SPEED
CONTROL UNIT

S203

FORESEE AND ANALYZE MACHINING
PATH ON BLOCK-BY-BLOCK BASIS

S204

IS ARC PART NEXT BLOCK?     NO

YES

S205

OUTPUT RECEIVED MACHINING
SPEED, ARC LENGTH ON CONTOUR
OF WORKPIECE FORMED BY
MACHINING, AND ARC LENGTH ON
MACHINING PATH TO ARC-PART
SPEED CONTROL UNIT

S206

CALCULATE COMMAND SPEED BY
ARC-PART SPEED CONTROL UNIT

S207

NO

ALL BLOCKS ANALYZED?

YES

END

Europäisches
Patentamt

European
Patent Office

Office européen
des brevets

# EUROPEAN SEARCH REPORT

Application Number

EP 16 20 2040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2015/239055 A1 (NIU YAN [JP] ET AL) 27 August 2015 (2015-08-27) * abstract * * claim 1 * * figures 5, 12, 13 * * paragraph [0082] * | 1-6 | INV. B23H7/06 |
| X,P | US 2016/236292 A1 (ONODERA YASUO [JP] ET AL) 18 August 2016 (2016-08-18) * last sentence, paragraph 3 * * paragraphs [0048] - [0050] * * figure 26 * | 1-6 | |
| X | & WO 2015/063932 A1 (MITSUBISHI ELECTRIC CORP) 7 May 2015 (2015-05-07) * abstract; figure 26 * | 1-6 | |
| X | US 4 837 415 A (MAGARA TAKUJI [JP] ET AL) 6 June 1989 (1989-06-06) * abstract * | 1 | |

TECHNICAL FIELDS SEARCHED (IPC)

B23H
G05B

The present search report has been drawn up for all claims

| Place of search | Date of completion of the search | Examiner |
|---|---|---|
| The Hague | 8 May 2017 | Jaeger, Hein |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 2040

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2017

| Patent document cited in search report | | | Publication date | Patent family member(s) | | | Publication date |
|---|---|---|---|---|---|---|---|
| US 2015239055 | A1 | | 27-08-2015 | CN | 104858514 | A | 26-08-2015 |
| | | | | EP | 2913134 | A1 | 02-09-2015 |
| | | | | JP | 5855692 | B2 | 09-02-2016 |
| | | | | JP | 2015160263 | A | 07-09-2015 |
| | | | | US | 2015239055 | A1 | 27-08-2015 |
| US 2016236292 | A1 | | 18-08-2016 | CN | 105682840 | A | 15-06-2016 |
| | | | | JP | 6000471 | B2 | 28-09-2016 |
| | | | | JP | WO2015063932 | A1 | 09-03-2017 |
| | | | | US | 2016236292 | A1 | 18-08-2016 |
| | | | | WO | 2015063932 | A1 | 07-05-2015 |
| US 4837415 | A | | 06-06-1989 | CH | 675091 | A5 | 31-08-1990 |
| | | | | DE | 3736004 | A1 | 05-05-1988 |
| | | | | JP | H0777697 | B2 | 23-08-1995 |
| | | | | JP | S63229228 | A | 26-09-1988 |
| | | | | US | 4837415 | A | 06-06-1989 |

EPO FORM P0459

For more details about this annex : see Official Journal of the European Patent Office, No. 12/82

**EP 3 184 224 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001162446 A
- JP H06126536 B
- JP 2015160263 A
- JP 5241850 B
- JP 2004148472 A
- JP 5077433 B